# EUROPEAN PATENT APPLICATION

(11) **EP 2 093 946 A1**
(43) Date of publication of application: **26.08.2009**
(21) Application number: 07846142.3
(22) Date of filing: 24.12.2007
(51) Int. Cl.: H04L 12/56, H04L 29/02

(54) **A METHOD, SYSTEM FOR PROCESSING SESSION AND MESSAGE**

(30) Priority: 30.04.2007 CN 200710107161; 12.09.2007 CN 200710149583
(71) Applicant: Huawei Technologies Co., Ltd., Longgang District, Shenzhen Guangdong 518129 (CN)
(72) Inventor: XU, Guojun, Guangdong 518129 (CN)
(74) Representative: Charles, Glyndwr
(86) International application number: PCT/CN2007/071316
(87) International publication number: WO 2008/131627

(57) **Abstract**

The present invention provides a method and system for processing sessions and messages, and relates to the network session technology. The method includes: the initiator sends a session request to the recipient service server; and the recipient service server generates session invitation information according to the received session request when detecting that a recipient is offline, and sends the session invitation information to the recipient. Therefore, the recipient knows the session invitation information received in the offline period even when the initiator provides no session content; and the method can be implemented in diversified ways, thus enriching the service experience of the user.

## Description

### FIELD OF THE INVENTION

The present invention relates to network session technologies, and in particular, to a method and system for processing sessions and messages when the recipient is offline.

### BACKGROUND

With the development of network technologies, users commonly contact and communicate with each other by creating a session through a network. The session means that two or more participants transfer messages or continuous media information by creating a session connection. However, after the session initiator sends a session invitation to the recipient in a session process based on the related art, the recipient tends to miss the session invitation when the recipient is offline.

In order to solve the foregoing problem, a Push to talk over Cellular (PoC) service is currently available, and provides a PoC Box when the recipient is offline. When the initiator sends a session request, the service server of the recipient triggers the PoC Box to join the session in place of the recipient and record the session content. After the recipient logs on, the recipient may obtain the session content from the PoC Box, and know the information on the session inviter who originates the session according to the obtained session content.

In the process of researching the present invention, the inventor finds at least the following problems in the related art:
In the related art, when the initiator sends a session request to the service server of the recipient and knows that the recipient is offline, the PoC Box records no session information when the initiator does not send the session content to the PoC Box. Consequently, the recipient is unable to know the session invitation information. The session invitation information may carry an initiator ID, session initiation time, and so on. In the method provided in the related art, the recipient does not know the information on being invited by a session request through the session content stored in the PoC Box unless the recipient logs on.
Moreover, in the related art, when the initiator sends a discrete message to the recipient and when the recipient is offline, the discrete message is usually stored as an offline message through an offline function entity, and the offline message is sent to the recipient after the recipient logs on. However, the recipient does not know the discrete message sent by the initiator to the recipient when the recipient keeps offline.

Therefore, the related art provides no session processing method which enables the recipient to know the session invitation information received in the offline period even when the initiator provides no session content. The related art provides no message processing method which enables the recipient to know the discrete message sent by the initiator to the recipient even when the recipient keeps offline.

### SUMMARY

The present invention provides a method and system for processing sessions and messages to enable the recipient to know the session invitation information received in the offline period even when the initiator provides no session content.

A session processing method provided in an embodiment of the present invention includes:
receiving, by a recipient service server, a session request sent by an initiator; and
generating session invitation information according to the received session request when detecting that the recipient is offline, and sending the session invitation information to the recipient.

A session processing system provided in an embodiment of the present invention includes:
an initiator, adapted to send a session request to the recipient service server;
a recipient service server, adapted to receive the session request sent by the initiator; generate session invitation information according to the received session request when detecting that a recipient is offline; and sending the session invitation information to the recipient; and
a recipient, adapted to obtain the session invitation information sent by the recipient service server.

A method for processing sessions and messages in an embodiment of the present invention includes:
receiving, by a recipient service server, a session request or a discrete message sent by an initiator;
sending the session request or the discrete message to an InterWorking Function (IWF) entity according to user settings or operator policies when detecting that the recipient is offline; and
sending, by the IWF entity, the session request or the discrete message to an recipient or accepting the session request or the discrete message in place of the recipient by using the underway message service of the recipient.

Another method for processing sessions and messages in an embodiment of the present invention includes:
receiving, by a recipient service server, a session request or a discrete message sent by the initiator; and
forwarding the session request or the discrete message to an authorized user through a service server of the online authorized user according to the authorized user information set by the recipient when detecting that the recipient is offline.

A system for processing sessions and messages in an embodiment of the present invention includes:
a recipient service server, adapted to receive a session request or a discrete message sent by an initiator; and send the session request or the discrete message to the IWF entity according to user settings or operator policies when detecting that the recipient is offline; and
an IWF entity, adapted to: receive the session request or the discrete message sent by the recipient service server; and send the session request or the discrete message to the recipient or accept the session request or the discrete message in place of the recipient by using the underway message service of the recipient.

A system for processing sessions and messages in an embodiment of the present invention includes:
a recipient service server, adapted to receive a session request or a discrete message sent by the initiator; and send the session request or the discrete message to the authorized user service server according to the authorized user information set by the recipient when detecting that the recipient is offline; and
an authorized user service server, adapted to forward the session request or the discrete message sent by the recipient service server to the authorized user.

The foregoing technical solution reveals the following:
Through the session processing method and system provided in an embodiment of the present invention, the recipient service server generates session invitation information according to the received session request and sends the information to the recipient when detecting that the recipient is offline. Therefore, the recipient knows the session invitation information received in the offline period even when the initiator provides no session content. This overcomes the defect in the related art, namely, the recipient is unable to know the session invitation received in the offline period when the initiator leaves no voice message.

Through a method and system for processing sessions and messages in an embodiment of the present invention, an IWF entity sends the session request or the discrete message to the recipient by using the underway message service of the recipient when detecting that the recipient is offline. Therefore, the recipient knows the session request or the discrete message sent by the initiator to the recipient in the offline period even when the initiator provides no session content.

Through a method and system for processing sessions and messages in an embodiment of the present invention, a recipient service server sends the session request or the discrete message sent by the initiator to an online authorized user according to the authorized user information set by the recipient when detecting that the recipient is offline. Therefore, the recipient knows the session request sent by the initiator to the recipient in the offline period through the set authorized user.

### BRIEF DESCRIPTION OF THE DRAWINGS

Figure 1a shows a structure of a first session processing system provided in an embodiment of the present invention;

Figure 1b shows a structure of a service server provided in an embodiment of the present invention;

Figure 2 is a flowchart of a session processing method which uses a Circuit Switched (CS) domain message to notify the recipient in an embodiment of the present invention;

Figure 3 is a flowchart of a session processing method which stores the session invitation information in an embodiment of the present invention;

Figure 4 is a flowchart of a method for joining a session in place of the recipient in an embodiment of the present invention;

Figure 5 is a flowchart of a method for processing a session by using an underway message service of the recipient in an embodiment of the present invention;

Figure 6 is a flowchart of another method for processing a session by using an underway message service of the recipient in an embodiment of the present invention;

Figure 7 is a flowchart of a method for processing a discrete message when the recipient is offline in an embodiment of the present invention;

Figure 8 is a flowchart of a method for forwarding a session request to an authorized user in an embodiment of the present invention;

Figure 9 shows a structure of a second session processing system provided in an embodiment of the present invention;

Figure 10 shows a structure of a third session processing system provided in an embodiment of the present invention;

Figure 11 shows a structure of a first message processing system provided in an embodiment of the present invention; and

Figure 12 shows a structure of a second message processing system provided in an embodiment of the present invention.

### DETAILED DESCRIPTION

In order to make the technical solution, objectives and merits of the present invention clearer, the present invention is detailed below by reference to accompanying drawings and

### preferred embodiments.

The embodiments of the present invention are based on a Session Initiation Protocol (SIP) system. The initiator sends a session request to the recipient service server; and the recipient service server generates session invitation information according to the received session request when detecting that the recipient is offline, and sends the session invitation information to the recipient.

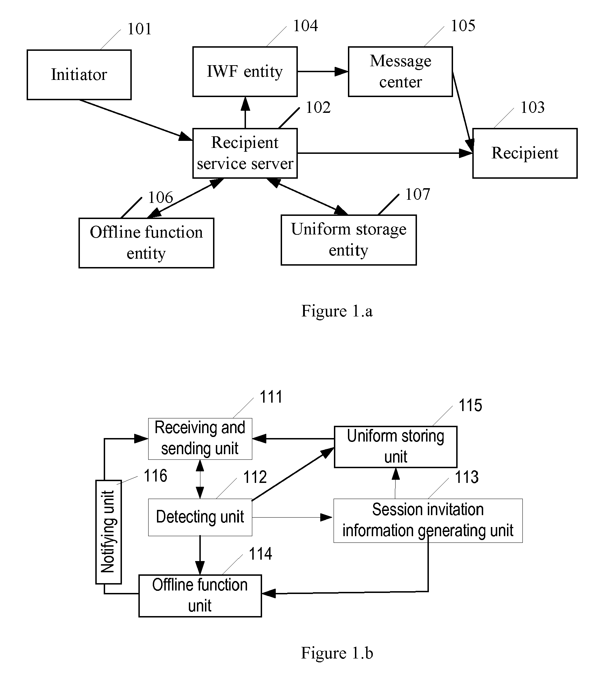

Figure 1a shows a structure of a first session processing system provided in an embodiment of the present invention. The system includes:
an initiator 101, adapted to send a session request to the recipient service server 102;
a recipient service server 102, adapted to: receive the session request sent by the initiator 101; generate session invitation information according to the received session request when detecting that the recipient 103 is offline; and sending the session invitation information to the recipient 103; and
a recipient 103, adapted to obtain the session invitation information sent by the recipient service server 102.

The session request may carry an initiator ID and a recipient ID. The initiator ID may carry the Uniform Resource Locator (URL) and the name of the initiator.

The session invitation information carries an initiator ID, a session initiation time, a recipient ID, and so on.

The system may further include:
an IWF entity 104, adapted to receive the session invitation information sent by the recipient service server 102, generate a message carrying the session invitation information according to the received session invitation information, and send the message to a message center 105; and
a message center 105, adapted to receive the message carrying the session invitation information from the IWF entity 104, and send the message to the recipient 103.

The message carrying the session invitation information may be a short message or multimedia message.

Accordingly, the message center 105 may be a Short Message Service Center (SMSC), Multimedia Message Service Center (MMSC), or Wireless Application Protocol (WAP) gateway.

Besides, the message center may be replaced with a WAP gateway. The WAP gateway receives the message carrying session invitation information from the IWF entity 104, and sends the message to the recipient in the mode of WAP PUSH.

The session invitation information generated by the recipient service server 102 may carry an activation ID. In this case, when the message format is a short message or a message over WAP PUSH, the message carrying session invitation information generated by the IWF entity 104 carries a header field indicative of activating the recipient client.

When the message format is a Multimedia Message Service (MMS) format, the content type field of the message carrying session invitation information generated by the IWF entity 104 carries a parameter indication of activating the recipient client. After receiving the message that carries a header field indicative of activating the recipient client and the session invitation information, the recipient 103 logs on automatically to create a session connection with the initiator 101 or keeps offline.

The recipient service server 102 is further adapted to:
return a ringing response to the initiator 101 when sending the session invitation information that carries an activation ID;
return a timeout response to the initiator 101 when detecting that the recipient 103 keeps offline in a set time period of the ringing period; and
send the session request to the recipient 103 when detecting that the recipient 103 logs on in the ringing period.

The initiator 101 is further adapted to wait for the recipient 103 to log on after receiving the ringing response, and end the session request after receiving the timeout response.

The recipient 103 creates a session connection with the initiator 101 after receiving the session request.

The system may further include an offline function entity 106, which is adapted to:
receive and store the session invitation information sent by the recipient service server 102; and send the stored session invitation information to the recipient service server 102 after receiving a logon notification sent by the recipient service server 102.

The service server 102 is further adapted to:
send a logon notification to the offline function entity 106 when detecting logon of the recipient 103; and
obtain the session invitation information stored by the offline function entity and send the information to the recipient.

The offline function entity 106 may be stand-alone or set in the recipient service server 102.

The system may further include a uniform storage entity 107, which is adapted to:
create a session connection with the initiator 101 after receiving an offline notification sent by the recipient service server 102, and store the session content sent by the initiator 101;
send the stored session content to the recipient service server 102 after receiving a logon notification sent by the recipient service server 102;
disconnect the session connection with the initiator after receiving a session end notification from the recipient service server 102; and
continue recording the session content sent by the initiator after receiving a session continuation notification.

The recipient service server 102 is further adapted to:
send an offline notification to the uniform storage entity 107 when detecting that the recipient is offline;
send the session content sent by the uniform storage entity 107 to the recipient when detecting logon of the recipient, and send a logon notification to the uniform storage entity 107;
detect whether the session between the uniform storage entity and the initiator is ended when the recipient logs on, and send a connection notification to the recipient 103 when the session is not ended; and
send a session end notification or session continuation notification to the uniform storage entity 107 after detecting that the recipient creates a session with the initiator.

The recipient 103 is further adapted to:
obtain the session content sent by the recipient service server 102; and
create a session connection with the initiator 101 after receiving the session creation notification from the recipient service server 102.

The uniform storage entity 107 may be stand-alone or set in the recipient service server 102.

The service server provided in an embodiment of the present invention is detailed below. Figure 1b shows a structure of a service server provided in an embodiment of the present invention. The service server includes:
a receiving and sending unit 111, adapted to send the session request to a detecting unit 112, and send the session invitation information after receiving the session invitation information from a session invitation information generating unit 113;
a detecting unit 112, adapted to detect whether the recipient is online according to the recipient ID in the session request after receiving the session request from the receiving and sending unit, and send the session request to the session invitation information generating unit 113 when detecting that the recipient is offline; and
a session invitation information generating unit 113, adapted to generate session invitation information according to a session request received from the detecting unit 112 after receiving the session request, and send the information to the receiving and sending unit 111.

The service server further includes an offline function unit 114, which is adapted to:
receive and store the session invitation information generated by the session invitation information generating unit 113; and
send the stored session invitation information to the receiving and sending unit 111 after receiving the logon notification from the detecting unit 112.

The detecting unit 112 is further adapted to send a logon notification to the offline function unit 114 after detecting that the recipient logs on.

The receiving and sending unit 111 sends the session invitation information sent by the offline function unit after receiving the session invitation information.

The service server may further include a uniform storing unit 115, which is adapted to:
create a session connection with the initiator after receiving an offline notification from the detecting unit 112, and store the session content sent by the initiator; and
send the stored session content to the receiving and sending unit 111 after receiving the logon notification from the detecting unit 112.

The detecting unit 112 is further adapted to:
send an offline notification to the uniform storing unit 115 after detecting that the recipient is offline; and
send a logon notification to the uniform storing unit 115 after detecting that the recipient logs on.

The receiving and sending unit 111 is further adapted to receive the session content from the uniform storing unit 115, and send the session content.

The service server may further include a notifying unit 116, which is adapted to send to the receiving and sending unit 111 a notification about the uniform storing unit 115 creating a session connection with the initiator in place of the recipient.

The receiving and sending unit 111 is further adapted to send the notification sent by the notifying unit 116 to the initiator.

The receiving and sending unit 111 is further adapted to send the notification to the recipient through the IWF entity or offline function unit 114.

The detecting unit 112 is further adapted to:
detect whether the session connection between the uniform storing unit 115 and the initiator is disconnected after detecting that the recipient logs on;
send a connection notification to the receiving and sending unit 111 when the session connection is not ended; and
send a session end notification or session continuation notification to the uniform storing unit 115 after detecting that the recipient creates a session with the initiator.

The receiving and sending unit 111 is further adapted to send the connection notification sent by the detecting unit 112 after receiving the connection notification.

The uniform storing unit 115 is further adapted to:
disconnect the session with the initiator after receiving a session end notification from the detecting unit 112; and
continue recording the session content sent by the initiator 101 after receiving a session continuation notification from the detecting unit 112.

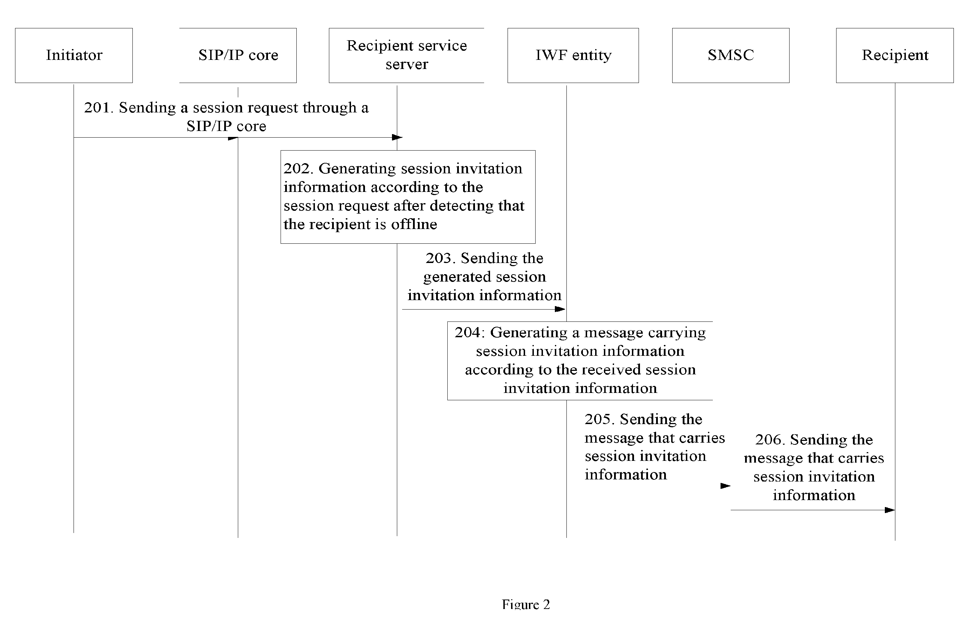

The session processing method provided in an embodiment of the present invention is detailed below by reference to the foregoing system. Figure 2 is a flowchart of a session processing method which uses a CS domain message to notify the recipient. The sending of session request by the initiator to the recipient and the detection of the recipient service server about whether the recipient is online are performed in a Packet Switched (PS) domain. In the session processing method shown in Figure 2, the CS domain message service is used to notify the recipient after the recipient is detected as offline. As shown in Figure 2, the method includes the following steps:

Step 201: The initiator sends a session request to the recipient service server through a SIP/IP core.

In this step, the initiator sends a session request to the SIP/IP Core first, and the SIP/IP Core finds the service server corresponding to the recipient according to the service information in the session request, and sends the session request to the recipient service server.

Supposing that the initiator is Alice and the recipient is Bob, the session request is exemplified below:
INVITE sip:bob@biloxi.example.com SIP/2.0
Via: SIP/2.0/TCP client.atlanta.example.com:5060;branch=z9hG4bK74bf9
Max-Forwards: 70
From: Alice <sip:alice@atlanta.example.com>;tag=9fxced76sl
To: Bob <sip:bob@biloxi.example.com>
Call-ID: 3848276298220188511@atlanta.example.com
CSeq: 1 INVITE
Contact: <sip:alice@client.atlanta.example.com;transport=tcp>
Content-Type: application/sdp
Content-Length: 151
v=0
o=alice 2890844526 2890844526 IN IP4 client.atlanta.example.com
s=-
c=IN IP4 192.0.2.101
t=0 0
m=audio 49172 RTP/AVP 0
a=rtpmap:0 PCMU/8000
where the session request may carry information such as an initiator ID, a recipient ID, and service type.

Step 202: The recipient service server generates session invitation information according to the received session request after detecting that the recipient is offline.

For example, when Bob is offline, the generated session invitation information may be in the following format:
MESSAGE sip: alice@example.com SIP/2.0
From: Alice <im:alice@example.com>
To: Bob <im:bob@example.com>
Content-type: message/imdn+xml
Content-Disposition: notification
Content-length: ...
   <imdn>
      <Sender>Bob</message-id>
      <datetime>2006-04-04T12:16:49-05:00</datetime>
      <recipient-uri>bob@example.com</recipient-uri>
      <note lang="en">One session invitation has been received</note>
      </imdn>
where the generated session invitation information carries an initiator ID, a sending time, recipient information, and so on.

In this step, the recipient service server returns a SIP signaling response to the initiator through a SIP/IP core to notify the initiator that the recipient is unreachable after detecting that the recipient is offline. The returned SIP signaling response may be in the following format:
SIP/2.0 480 Temporarily Unavailable
Via: SIP/2.0/TCP client.atlanta.example.com:5060;branch=z9hG4bK74b43
;received=192.0.2.101
From: Alice <sip:alice@atlanta.example.com>;tag=9fxced76sl
To: Bob <sip:bob@biloxi.example.com>;tag=3flall2sf
Call-ID: 3848276298220188511@atlanta.example.com
CSeq: 1 INVITE
Content-Length: 0

In this step, the recipient service server returns a session rejection response to the initiator through a SIP/IP core after detecting that the recipient is offline, and the initiator terminates the session request.

Step 203: The recipient service server sends the generated session invitation information to the IWF entity.

Step 204: The IWF entity generates a message carrying session invitation information according to the received session invitation information.

The IWF entity may convert the format according to the protocol used by the recipient, and generate a message carrying session invitation information. For example, the IWF entity may generate a short message carrying session invitation information, or a multimedia message carrying session invitation information, or a short message that carries session invitation information and is carried over WAP PUSH.

Likewise, the message carrying session invitation information carries an initiator ID, sending time, recipient information, and so on.

Step 205: The IWF entity sends the message carrying session invitation information to the SMSC.

In step 204, when the IWF entity generates a multimedia message carrying session invitation information, the IWF entity sends the multimedia message carrying session invitation information to an MMSC; when the IWF entity generates a short message that carries session invitation information and is carried over WAP PUSH, the IWF entity sends the short message to a WAP gateway.

Step 206: The SMSC sends the message carrying session invitation information to the recipient according to the recipient information in the converted session invitation information.

Through the foregoing method, the session invitation information is sent to the recipient by using the CS domain so that the recipient may know the information on being invited into a session even when the recipient is offline.

Based on the foregoing process, in step 202, the recipient service server may generate session invitation information carrying an activation ID after detecting that the recipient is offline. Afterward, when the IWF entity converts the session invitation information to a short message format or a message carried over WAP PUSH, the generated message that carries session invitation information includes a header field indicative of activating the recipient client.
When the IWF entity converts the session invitation information to a multimedia message format, the content type field in the generated message that carries session invitation information includes a parameter indication of activating the recipient client. After obtaining the converted message that carries a parameter indication of activating the recipient client and carries session invitation information, the recipient activates the recipient client automatically, and logs on automatically to create a session connection with the initiator; or chooses whether to log on or not. The recipient service server returns a ringing response to the initiator when sending the session invitation information carrying an activation ID, and the initiator waits for the recipient to log on. When the recipient does not log on within a set time period in the ringing period, the recipient service server sends a timeout response to the initiator through a SIP/IP core, and the initiator terminates the session request.

The session invitation information carrying an activation ID may have the following header field format on the basis of the format in step 202:
MESSAGE sip: alice@example.com SIP/2.0
From: Alice <IM:alice@example.com>
To: Bob <IM:bob@example.com>
Content-type: application
Content-Disposition: IM Client Login
Content-length: ...

In this case, the recipient service server returns a ringing response to the initiator to notify the initiator to wait for an answer from the recipient. The ringing response may be in the following format:
SIP/2.0 180 Ringing
From: Alice <sip:alice@atlanta.example.com>;tag=9fxced76sl
To: Bob <sip:bob@biloxi.example.com>;tag=314159
Call-ID: 3848276298220188511@atlanta.example.com
Contact: <sip:bob@client.biloxi.example.com;transport=tcp>
CSeq: 2 INVITE
Content-Length: 0

The IWF converts the session invitation information carrying an activation ID to a message format after receiving the session invitation information, as exemplified below:
ContentType = application/IM Client
   Date = 2007-04-20 02:25:28
   DeliveryReport = false
   DeliveryTime = 2007-04-20 02:25:28 (absolute time)
   Expiry = 2007-04-21 02:25:28 (absolute time)
   From = bob@example.com
   MessageClass = 0x80
   MessageType = 0x80
   MmsVersion = 0x90
   Relatedity = 0x80
   ReadReply = false
   SenderVisibility = true
   Subject = This is a test
   To = [139XXXXXXXX]
   TransactionId = {auto}
   Content:
   ...

The process of creating a session channel after the recipient logs on is based on the related art and is not repeated here any further.

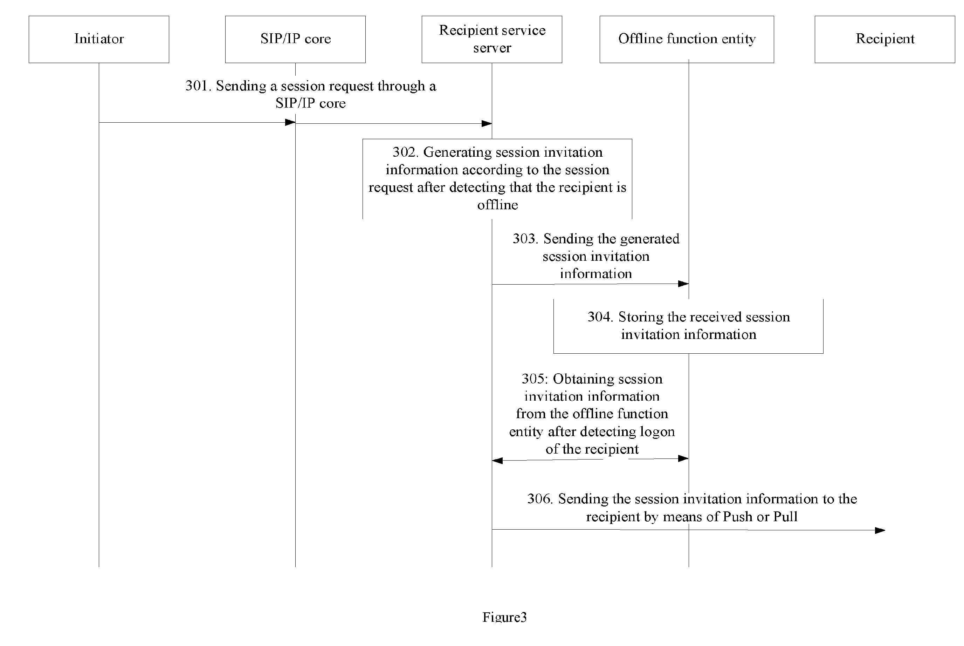

Besides, the session invitation information generated by the service server may be stored for the recipient through an offline function entity rather than being sent to the recipient through the CS domain immediately, and the recipient obtains the session invitation information after logging on. Figure 3 is a flowchart of a session processing method which stores the session invitation information. As shown in Figure 3, the method includes the following steps:

Step 301: The initiator sends a session request to the recipient service server through a SIP/IP core.

Step 302: The recipient service server generates session invitation information according to the session request of the initiator after detecting that the recipient is offline.

In this step, the recipient service server returns a session rejection response to the initiator through a SIP/IP core to after detecting that the recipient is offline, and the initiator terminates the session request.

Step 301 and step 302 are implemented in the same way as step 201 and 202 respectively.

The recipient service server sends a response to the initiator through a SIP/IP core to notify the initiator that the recipient is offline after detecting that the recipient is offline.

Step 303: The recipient service server sends the generated session invitation information to an offline function entity.

In this embodiment, the offline function entity is stand-alone. In practice, the offline function entity may be set in the recipient service server, and the service server generates and stores the session invitation information uniformly.

Step 304: The offline function entity stores the received session invitation information.

In this step, the offline function entity may store the session invitation information in the form of an offline message.

Step 305: The recipient service server obtains session invitation information from the offline function entity after detecting that the recipient logs on.

Step 306: The recipient service server sends the session invitation information to the recipient by means of PUSH or PULL.

In this step, the recipient creates a session channel with the recipient service server after the recipient logs on in order to obtain the session invitation information.

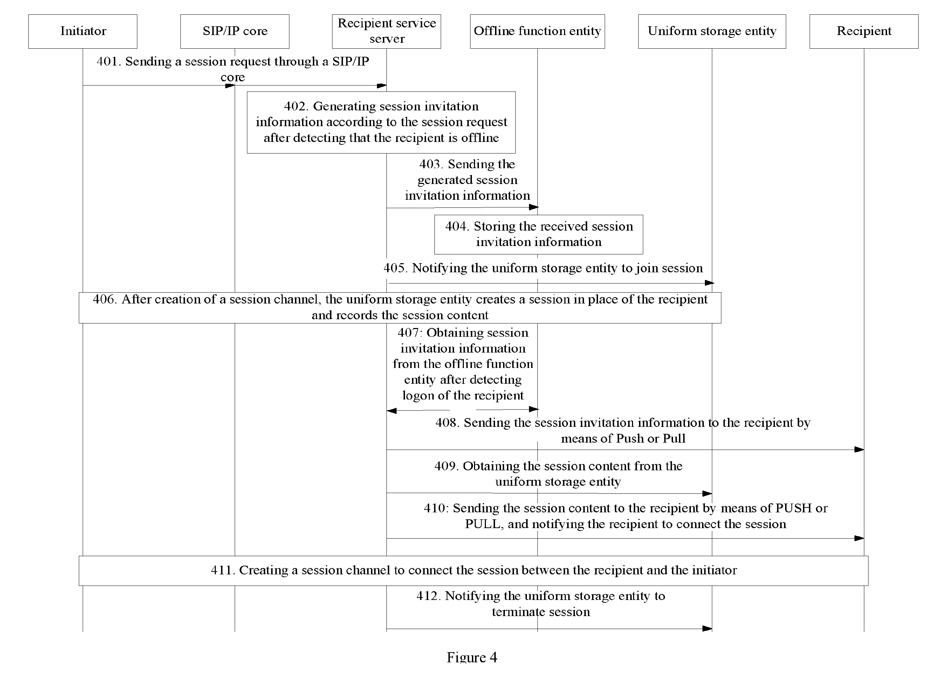

Based on the process shown in Figure 3, a uniform storage entity may be used to perform the session in place of the recipient and record the session content. After logging on, the recipient receives the session invitation information from the offline function entity and knows the information on being invited into a session. When the session is not ended, the recipient may create a session channel with the initiator to connect the session, and the uniform storage entity stops the session. Figure 4 is a flowchart of a method for performing a session in place of the recipient in this embodiment. The method includes the following steps:

Step 401: The initiator sends a session request to the recipient service server through a SIP/IP core.

Step 402: The recipient service server generates session invitation information according to the received session request after detecting that the recipient is offline.

Step 403: The recipient service server sends the generated session invitation information to an offline function entity.

Step 404: The offline function entity stores the session invitation information in the form of an offline message.

Step 405: The recipient service server notifies the uniform storage entity to join the session.

After detecting that the recipient is offline, the recipient service server notifies the uniform storage entity to join the session in place of the recipient when the recipient has subscribed to the substitute session service.

Step 403 and step 405 are not sequence-sensitive, and may be performed concurrently.

After completion of step 405, the uniform storage entity sends a SIP 200 ok response to the recipient service server. The recipient service server returns a SIP 200 ok response to the initiator through a CIP/IP Core, notifying the initiator that the uniform storage entity may join the session in place of the recipient.

Step 406: Through the recipient service server, the uniform storage entity creates a session with the initiator and records the session content.

Step 407: The recipient service server obtains session invitation information from the offline function entity after detecting that the recipient logs on.

Step 408: The recipient obtains the session invitation information by means of PULL or PUSH.

Step 409: The recipient service server obtains the session content from the uniform storage entity.

Step 407 and step 409 are not sequence-sensitive, and may be performed concurrently.

Step 410: The recipient service server sends the session content to the recipient by means of PUSH or PULL, and notifies the recipient to connect the session.

Step 411: The recipient creates a session channel with the initiator to connect the session.

Step 412: The recipient service server notifies the uniform storage entity to terminate the session with the initiator.

Besides, the recipient may choose whether to connect the session or not according to the received session invitation information. When the recipient does not connect the session, the uniform storage entity goes on performing the session in place of the recipient and records the session content. After the recipient logs on, the recipient service server obtains session records from the uniform storage entity, and sends the session records to the recipient by means of PULL or PUSH. That is, in step 410, the recipient service server does not notify the recipient to connect the session, and does not perform step 411 or step 412. Besides, after the recipient logs on, the recipient service server may send a session continuation notification to the uniform storage entity when sending a connection notification to the recipient. The uniform storage entity continues receiving and recording the session content sent by the initiator.

In the embodiment shown in Figure 4, the uniform storage entity joins the session in place of the recipient, and may use a SIP message to notify the uniform storage entity of the initiator to join the session in place of the recipient. Meanwhile, the uniform storage entity may use a CS domain to send session invitation information and a notification to the recipient, where the notification indicates that the uniform storage entity joins the session in place of the recipient.

The method provided in the foregoing embodiment may exist independently or in a combination of the methods of the foregoing embodiments. For example, in the embodiment shown in Figure 4, according to the presetting, the uniform storage entity may join the session in place of the recipient. Meanwhile, the session invitation information is sent to the recipient through the CS domain in the embodiment shown in Figure 2. Further, the recipient may log on through automatic activation to connect the session with the initiator after receiving the session invitation information that carries an activation ID.

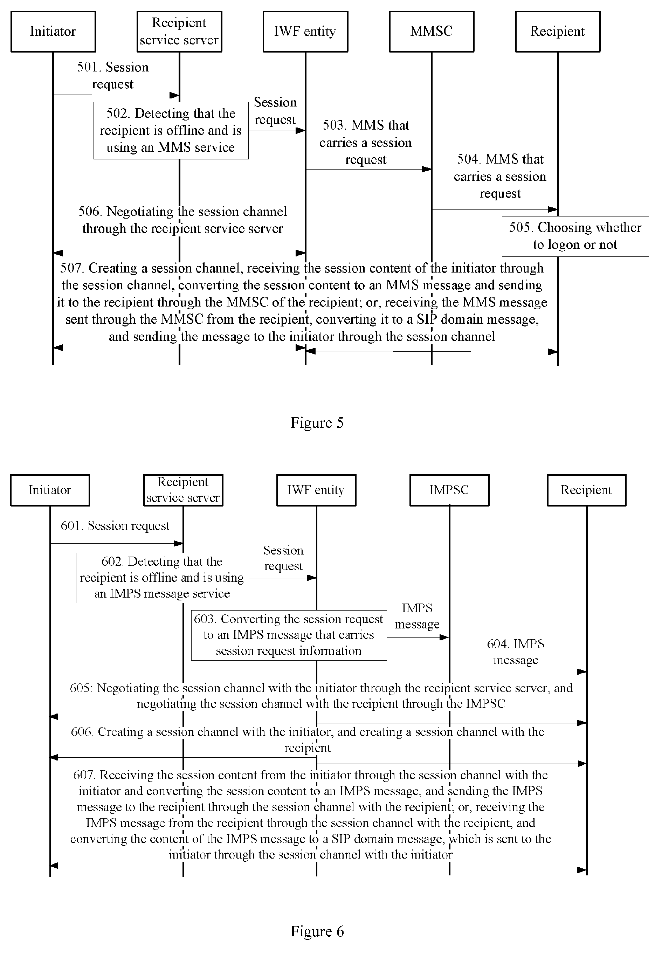

Apart from the methods provided in the foregoing embodiment, when the recipient service server detects that the recipient is offline and using another message service, the recipient service server may send the session request to the recipient through the underway message service of the recipient according to user settings or operator policies. Figure 5 is a flowchart of a method for processing a session through an underway message service of the recipient in an embodiment of the present invention. The method includes the following steps:

Step 501: The initiator sends a session request to the recipient service server.

Step 502: The recipient service server detects that the recipient is offline and using an MMS service, and therefore, sends the received session request to the IWF entity.

The recipient service server may obtain the information on the underway MMS service of the recipient from a Home Subscriber Server (HSS) of the recipient, and sends the information to the IWF entity; or obtains information on other underway message services of the recipient from the HSS of the recipient.

Step 503: After receiving the session request, the IWF entity converts the session request to an MMS message that carries the session request information, and sends the MMS message to the MMSC of the recipient.

Step 504: The MMSC of the recipient sends the received MMS message carrying session request information to the recipient.

Step 505: After receiving the MMS message that carries session request information, the recipient may choose whether to log on or not. When the recipient logs on, the recipient service server may connect the session to the recipient, and a session connection is created between the initiator and the recipient; when the recipient does not log on, the process proceeds to step 506.

Step 506: The IWF negotiates a session channel with the initiator through the recipient service server.

In this embodiment, after the recipient receives a session request from the initiator, the IWF may accept the session request directly to create a session channel between the recipient and the IWF according to user settings or operator policies. Through this channel, the recipient exchanges messages with the initiator through conversion performed by the IWF.

The process of negotiating a session channel in this step is based on the related art and not repeated here any further.

Step 507: Upon completion of negotiating the session channel, the session channel is created. Through the session channel, the session content of the initiator is received, and converted to an MMS message. Through the MMSC of the recipient, the MMS message is sent to the recipient. Alternatively, the MMS message sent through the MMSC of the recipient is received and converted to a SIP domain message, which is sent to the initiator through the created session channel.

In the process shown in Figure 5, the recipient service server may send the session request to the IWF entity directly after detecting that the recipient is offline. The IWF entity obtains the information on the underway MMS service of the recipient from the HSS, and the received session request is sent to the IWF entity. The underway message service of the recipient may be SMS, an email service or other message services.

Figure 6 is a flowchart of another method for processing sessions through an underway message service of the recipient in an embodiment of the present invention. In this process, the IFW creates a session channel not only with the initiator, but also with the recipient through certain services. As shown in Figure 6, the method may include the following steps:

Step 601: The initiator sends a session request to the recipient service server.

Step 602: The recipient service server detects that the recipient is offline and using an Instant Messaging and Presence Service (IMPS), and therefore, sends the received session request to the IWF entity.

The recipient service server may obtain the information on the underway service of the recipient from the HSS of the recipient.

Step 603: After receiving the session request, the IWF entity converts the session request to an IMPS message that carries the session request information, and sends the IMPS message to an Instant Messaging and Presence Service Center (IMPSC).

Step 604: The IMPSC sends the IMPS message carrying session request information to the recipient.

Step 605: The IWF entity negotiates a session channel with the initiator through the recipient service server, and negotiates the session channel with the recipient through the IMPSC.

Step 606: The IWF entity creates a session channel with the initiator, and creates a session channel with the recipient.

Step 607: Through the session channel with the initiator, the IWF entity receives the session content from the initiator, and converts the session content to an IMPS message. Through the session channel with the recipient, the IWF entity sends the IMPS message to the recipient. Alternatively, through the session channel with the recipient, the IWF receives the IMPS message from the recipient, and converts the content of the IMPS message to a SIP domain message, which is sent to the initiator through the session channel with the initiator.

In the process shown in Figure 6, the recipient service server may send the session request to the IWF entity directly after detecting that the recipient is offline. The received session request is sent to the IWF entity after the IWF entity detects that the recipient is using an IMPS message service.

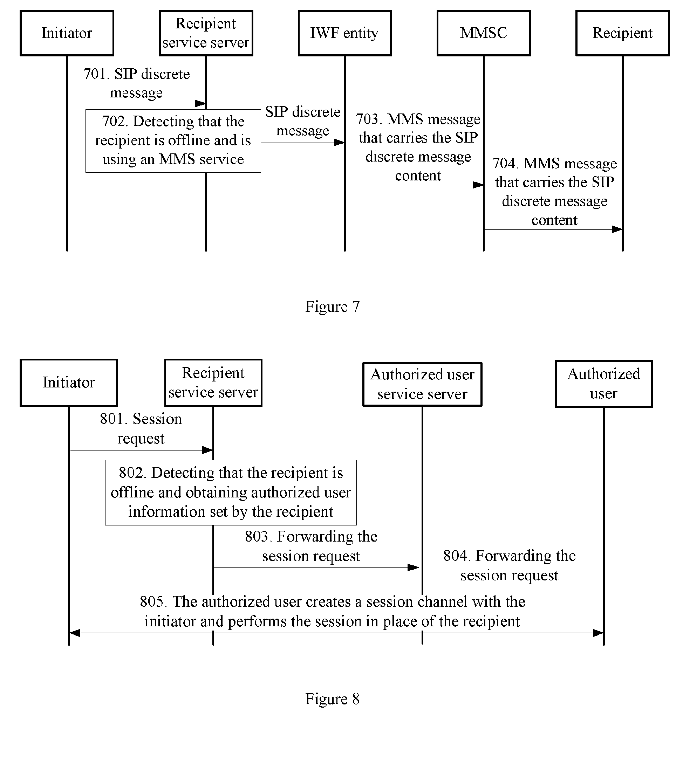

All the foregoing embodiments are about processes in which the initiator sends a session request to the recipient. When the initiator sends a discrete message instead of a session request to the recipient and the recipient is offline, the content of the discrete message may be sent to the recipient through other underway message services of the recipient as well. Figure 7 is a flowchart of a method for processing a discrete message when the recipient is offline in an embodiment of the present invention. The method includes the following steps:

Step 701: The recipient service server receives a SIP discrete message from the initiator.

Step 702: The recipient service server detects that the recipient is offline and using an MMS service, and therefore, sends the received SIP discrete message to the IWF entity.

Step 703: After receiving the SIP discrete message, the IWF entity converts the SIP discrete message to an MMS message that carries the content of the discrete message, and sends the MMS message to the MMSC.

Step 704: The MMSC sends the MMS message sent by the IWF entity to the recipient.

After this step, the recipient returns a response to the IWF entity through the MMSC, indicating receipt of the MMS message. The IWF entity may also return a response to the initiator through the SMSC, indicating that the recipient receives the MMS message.

When the initiator sends a session request or a discrete message to the recipient and the recipient is offline, the session request or the discrete message may be sent to another online user authorized by the recipient according to settings of the recipient. Figure 8 is a flowchart of a method for forwarding a session request to an authorized user in an embodiment of the present invention. This embodiment supposes that the initiator sends a session request to the recipient; in practice, when the initiator sends a discrete message to the recipient, the process provided in this embodiment is also applicable. As shown in Figure 8, the method may include the following steps:

Step 801: The recipient service server receives a session request from the initiator.

Step 802: The recipient service server detects that the recipient is offline, and obtains authorized user information set by the recipient.

In this step, the recipient service server may learn whether the recipient has set an authorized user from the HSS of the recipient after detecting that the recipient is offline, and further obtain the authorized user information when any authorized user is set.

Step 803: The recipient service server forwards the session request to the authorized user service server according to settings of the recipient.

Step 804: The authorized user service server sends the received session request to the authorized user.

Step 805: After receiving the session request, the authorized user creates a session channel with the initiator, and performs the session with the initiator in place of the recipient.

In the process shown in Figure 8, the recipient service server may send a notification about an authorized user joining the session in place of the recipient to the recipient through the IWF entity by using an underway message service of the recipient. The method of sending the notification may be performed through the process shown in Figure 7. This notification may also be stored through an offline function entity, and the recipient obtains the notification when logging on. Besides, the session content between the initiator and the authorized user may be stored through a uniform storage entity.

The recipient service server may also send the notification about the authorized user joining the session in place of the recipient to the initiator through the SIP domain.

Besides, in the process shown in Figure 8, the recipient service server may also record the session content between the initiator and the authorized user so that the recipient may search for the session content.

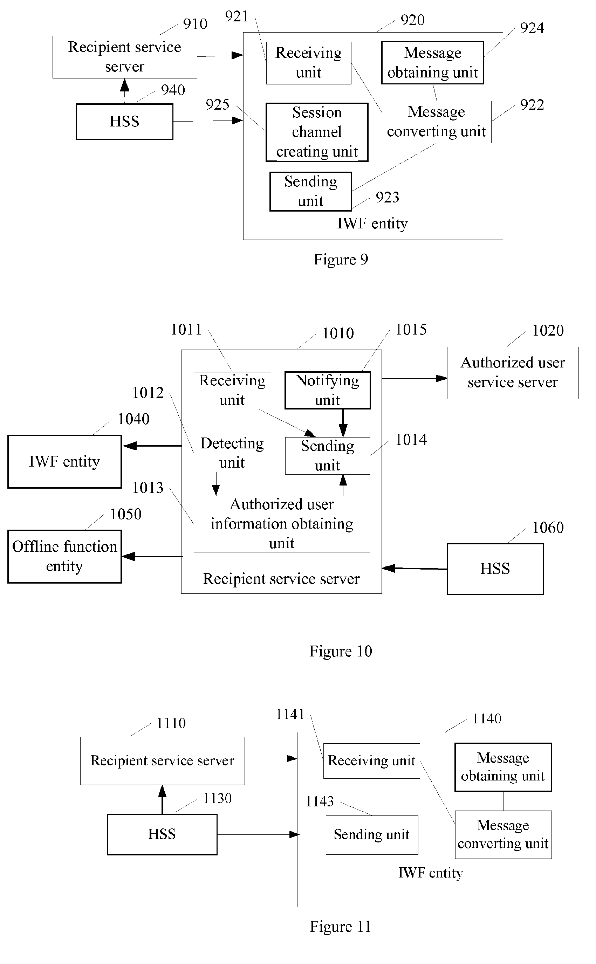

Figure 9 shows a structure of a second session processing system provided in an embodiment of the present invention. The system includes:
a recipient service server 910, adapted to: receive the session request from the initiator, and send the session request to the IWF entity 920 when detecting that the recipient is offline; and
an IWF entity 920, adapted to: receive the session request from the recipient service server 910; and send the session request to the recipient or accept the session request in place of the recipient by using an underway message service of the recipient.

The system may further include: an HSS 940, adapted to store the information on the underway message service of the recipient.

The recipient service server 910 is further adapted to obtain the information on the underway message service of the recipient from the HSS 940.

The IWF entity 920 is adapted to:
obtain the information on the underway message service of the recipient from the HSS 940 or recipient service server 910; and
perform the operation of sending the session request to the recipient or accepting the session request in place of the recipient by using the information on the underway message service of the recipient.

The IWF entity 920 may include:
a receiving unit 921, adapted to receive the session request from the recipient service server 910;
a message converting unit 922, adapted to convert the session request received by the receiving unit 921 to a message of the underway message service of the recipient; and
a sending unit 923, adapted to send the message converted by the message converting unit 922 to the recipient.

The IWF entity 920 further includes a message obtaining unit 924 which is adapted to:
obtain the information on the underway message service of the recipient from the HSS 940 or recipient service server 910; and
send the obtained information to the message converting unit 922.

The message converting unit 922 is further adapted to:
receive the information on the message service sent by the message obtaining unit 924; and
use the information on the message service to perform the operation of converting the session request received by the receiving unit 921 to a message of the underway message service of the recipient.

The IWF entity 920 may further include a session channel creating unit 925 which is adapted to create a session channel with the initiator.

The receiving unit 921 is further adapted to receive the session content from the initiator through the session channel created by the session channel creating unit 925.

The message converting unit 922 is further adapted to convert the session content received by the receiving unit 921 to a message of the underway message service of the recipient.

The session channel creating unit 925 is further adapted to create a session channel with the recipient.

The sending unit 923 is further adapted to send the message converted by the message converting unit 922 to the recipient through the session channel created by the session channel creating unit 925.

The system shown in Figure 9 may be used to implement the methods shown in Figure 5 and Figure 6.

Figure 10 shows a structure of a third session processing system provided in an embodiment of the present invention. The system includes:
a recipient service server 1010, adapted to receive the session request sent by the initiator, and send the session request to the authorized user service server 1020 according to the authorized user information set by the recipient when detecting that the recipient is offline; and
an authorized user service server 1020, adapted to forward the session request sent by the recipient service server 1010 to the authorized user.

The system may further include:
an authorized user 1030, adapted to create a session channel with the initiator after receiving the session request from the authorized user service server 1020, and perform the session with the initiator in place of the recipient.

The system may further include:
an IWF entity 1040, adapted to receive the notification from the recipient service server 1010, and send the notification to the recipient through an underway service message of the recipient or a CS domain; and
an offline function entity 1050, adapted to receive the notification from the recipient service server 1010, and send the notification to the recipient in the form of an offline message.

The recipient service server 1010 is further adapted to send the notification about the authorized user performing the session with the initiator in place of the recipient to the IWF entity 1040 or offline function entity 1050.

The recipient service server 1010 is further adapted to send the notification about the authorized user performing the session with the initiator in place of the recipient to the initiator.

The system may further include a recipient uniform storage entity, adapted to store the session content between the initiator and the authorized user.

The system may further include an HSS 1060 which is adapted to store the authorized user information set by the recipient.

The recipient service server 1010 is further adapted to obtain the authorized user information set by the recipient from the HSS 1060.

The recipient service server 1010 may include:
a receiving unit 1011, adapted to receive the session request from the initiator 1010;
a detecting unit 1012, adapted to detect whether the recipient is online;
an authorized user information obtaining unit 1013, adapted to obtain the authorized user information set by the recipient after the detecting unit 1012 detects that the recipient is offline; and
a sending unit 1014, adapted to send the session request received by the receiving unit 1011 to the authorized user according to the authorized user information obtained by the authorized user information obtaining unit 1013.

The recipient service server 1010 further include a notifying unit 1015 which is adapted to generate a notification about the authorized user performing the session with the initiator in place of the recipient.

The sending unit 1014 is further adapted to: send the notification generated by the notifying unit 1015 to the recipient through an IWF entity or offline function entity, or by using the underway message service of the recipient; and/or send the notification generated by the notifying unit 1015 to the initiator.

The system shown in Figure 10 may be used to implement the method shown in Figure 8.

Figure 11 shows a structure of a first session processing system provided in an embodiment of the present invention. The system includes:
a recipient service server 1110, adapted to receive the discrete message from the initiator, and send the discrete message to the IWF entity 1140 when detecting that the recipient is offline and using another message service; and
an IWF entity 1140, adapted to receive the discrete message from the recipient service server 1110, convert the discrete message to a message of the underway message service of the recipient, and send the message to the recipient.

The system may further include an HSS 1130 which is adapted to store the information on the underway service of the recipient.

The recipient service server 1110 is further adapted to obtain the information on the underway service of the recipient from the HSS 1130, and detect the underway message service of the recipient according to such information.

The system may further include an IWF entity 1140 which is adapted to:
receive the discrete message from the recipient service server 1110;
convert the discrete message to a message of the underway message service of the recipient; and
send the converted message to the recipient through the message center corresponding to the underway message service of the recipient.

The IWF entity 1140 includes:
a receiving unit 1141, adapted to receive the discrete message from the recipient service server 1110;
a message converting unit 1142, adapted to convert the discrete message received by the receiving unit 1141 to a message of the underway message service of the recipient; and
a sending unit 1143, adapted to send the message converted by the message converting unit 1142 to the recipient.

The IWF entity 1140 further includes a message obtaining unit 1144 which is adapted to:
obtain the information on the underway message service of the recipient from the HSS 1130 or recipient service server 1110; and
send the obtained information to the message converting unit 1142.

The message converting unit 1142 is further adapted to:
receive the information on the message service sent by the message obtaining unit 1144; and
use the information on the message service to perform the operation of converting the discrete message received by the receiving unit 1141 to a message of the underway message service of the recipient.

The system shown in Figure 11 may be used to implement the method shown in Figure 7.

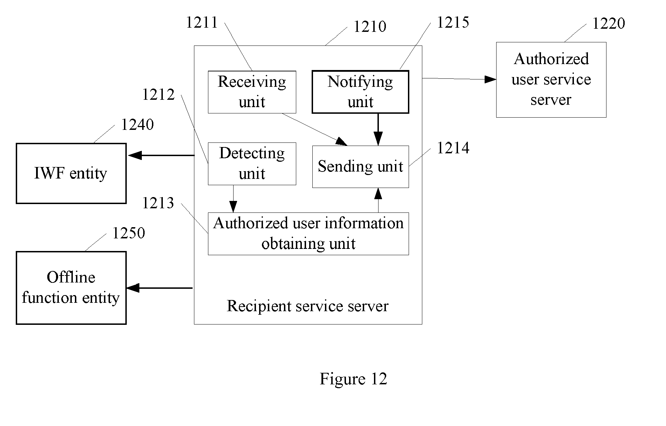

Figure 12 shows a structure of a second message processing system provided in an embodiment of the present invention. The system includes:
a recipient service server 1210, adapted to receive the discrete message sent by the initiator, and forward the discrete message to the authorized user service server 1220 according to the authorized user information set by the recipient when detecting that the recipient is offline; and
an authorized user service server 1220, adapted to forward the discrete message sent by the recipient service server 1210 to the authorized user.

The system may further include:
an IWF entity 1240, adapted to receive the notification from the recipient service server 1210, and send the notification to the recipient through an underway service message of the recipient or a CS domain; and
an offline function entity 1250, adapted to receive the notification from the recipient service server 1210, and send the notification to the recipient in the form of an offline message.

The recipient service server 1210 is further adapted to send the notification about the authorized user receiving the discrete message in place of the recipient to the IWF entity 1240 or offline function entity 1250.

The recipient service server 1210 is further adapted to send the notification about the authorized user receiving the discrete message in place of the recipient to the initiator.

The recipient service server 1210 includes:
a receiving unit 1211, adapted to receive the discrete message from the initiator;
a detecting unit 1212, adapted to detect whether the recipient is online;
an authorized user information obtaining unit 1213, adapted to obtain the authorized user information set by the recipient after the detecting unit 1212 detects that the recipient is offline; and
a sending unit 1214, adapted to send the discrete message received by the receiving unit 1211 to the authorized user according to the authorized user information obtained by the authorized user information obtaining unit 1213.

The recipient service server may further include a notifying unit 1015 which is adapted to generate a notification about the authorized user receiving the discrete message in place of the recipient.

The sending unit 1214 is further adapted to:
send the notification generated by the notifying unit 1215 to the recipient through an IWF entity 1240 or offline function entity 1250, or by using the underway message service of the recipient; and/or
send the notification generated by the notifying unit 1215 to the initiator.

The system shown in Figure 12 may be used to implement the method shown in Figure 8.

The foregoing technical solution reveals the following:
Through the session processing method, system, and service server provided in an embodiment of the present invention, the recipient service server generates session invitation information according to the received session request and sends the information to the recipient when detecting that the recipient is offline. Therefore, the recipient knows the session invitation information received in the offline period even when the initiator provides no session content. This overcomes the defect in the related art, namely, the recipient is unable to know the session invitation received in the offline period when the initiator leaves no voice message.

Further, the recipient may receive the session invitation information in time in the offline state, and may log in through automatic activation by receiving the session invitation information, and create a session with the initiator in time.

Further, the method enables storing of the session invitation information in the form of an offline message through an offline function entity. The session invitation information is sent to the recipient when the recipient logs on so that the recipient knows the information on being invited into a session in the offline period. Moreover, a uniform storage entity may be set to join the session in place of the recipient and record the session content. Therefore, the recipient may obtain the recorded session content after receiving the session invitation information. Furthermore, before completion of the session, the recipient may choose to connect the session with the initiator, thus enriching the service experience of the user.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A session processing method, comprising:
receiving, by a recipient service server, a session request sent by an initiator; and
generating session invitation information according to the received session request when detecting that a recipient is offline, and sending the session invitation information to the recipient.

2. The session processing method of claim 1, wherein:
the session request carries an initiator ID and a recipient ID; and
a process of generating the session invitation information according to the received session request comprises: generating the session invitation information which carries one or more of these items: the initiator ID, the recipient ID, and a session initiation time, according to the session request which carries the initiator ID, the recipient ID, and the session initiation time.

3. The session processing method of claim 1, wherein a process of sending the session invitation information to the recipient comprises:
sending, by the recipient service server, the session invitation information to an InterWorking Function (IWF) entity;
generating, by the IWF entity, a message carrying the session invitation information according to the received session invitation information, and sending the message to a message center; and
sending, by the message center, converted session invitation information to the recipient.

4. The session processing method of claim 3, wherein:
the message carrying the session invitation information is a short message, and the message center is a Short Message Service Center (SMSC); or
the message carrying the session invitation information is a multimedia message and the message center is a Multimedia Message Service Center (MMSC).

5. The session processing method of claim 3, wherein:
the session invitation information generated by the recipient service server carries an activation ID;
when the message carrying the session invitation information is a short message, the message carrying the session invitation information generated by the IWF entity carries a header field indicative of activating a recipient client;
when the message carrying the session invitation information is a multimedia message, a content type field of the message carrying the session invitation information generated by the IWF entity carries a parameter indication of activating the recipient client; and
the method further comprises: after obtaining a converted message that carries the header field or parameter indication of activating the recipient client and carries the session invitation information, logging on automatically, by the recipient, to create a session connection with the initiator, or choosing not to log on.

6. The session processing method of claim 1, wherein a process of sending the session invitation information to the recipient comprises:
sending, by the recipient service server, the generated session invitation information to an offline function entity;
storing, by the offline function entity, the session invitation information in the form of an offline message;
obtaining, by the recipient service server, the stored session invitation information from the offline function entity after detecting that the recipient logs on, and sending the session invitation information to the recipient.

7. The session processing method of claim 5, further comprising:
returning, by the recipient service server, a ringing response to the initiator when sending the session invitation information that carries the activation ID, whereupon the initiator waits for the recipient to log on;
returning a timeout response to the initiator when the recipient does not log on in a set time period of a ringing period, whereupon the initiator terminates the session request; and
sending the session request to the recipient when the recipient logs on in the ringing period, whereupon the recipient creates a session with the initiator.

8. The session processing method of claim 3, further comprising:
triggering, by the recipient service server, a uniform storage entity to perform a session with the initiator in place of the recipient and record a session content after detecting that the recipient is offline;
obtaining the session content from the uniform storage entity after detecting that the recipient logs on, and sending the session content to the recipient;
after triggering the uniform storage entity to perform the session with the initiator in place of the recipient, the method further comprises:
sending, by the recipient service server, a notification about the uniform storage entity performing the session with the initiator in place of the recipient to the initiator; and/or
sending, by the recipient service server, a notification about the uniform storage entity performing the session with the initiator in place of the recipient to the recipient through the (IWF) entity or offline function entity.

9. The session processing method of claim 8, further comprising:
notifying, by the recipient service server, the recipient to create a session connection with the initiator when detecting that the session between the uniform storage entity and the initiator is not ended after the recipient logs on.

10. A session processing system, comprising:
an initiator, adapted to send a session request to a recipient service server;
a recipient service server, adapted to: receive the session request sent by the initiator; generate session invitation information according to the received session request when detecting that the recipient is offline; and sending the session invitation information to the recipient; and
a recipient, adapted to obtain the session invitation information presented by the recipient service server.

11. The session processing system of claim 10, further comprising:
an InterWorking Function (IWF) entity, adapted to receive the session invitation information sent by the recipient service server, generate a message carrying the session invitation information according to the received session invitation information, and send the message to a message center; and
a message center, adapted to receive the message carrying the session invitation information from the IWF entity, and send the message to the recipient.

12. The session processing system of claim 10, further comprising:
an InterWorking Function (IWF) entity, adapted to receive the session invitation information sent by the recipient service server, generate a message carrying the session invitation information according to the received session invitation information, and send the message to a Wireless Application Protocol (WAP) gateway; and
a WAP gateway, adapted to receive the message carrying the session invitation information from the IWF entity, and send the message to the recipient by means of WAP Push.

13. The session processing system of claim 11 or claim 12, wherein:
the session invitation information generated by the recipient service server carries an activation ID;
the message carrying the session invitation information generated by the IWF entity carries a header field indicative of activating a recipient client; and
the recipient, after receiving the message that carries the header field indicative of activating the recipient client and carries the session invitation information, logs on automatically to create a session connection with the initiator or chooses not to log on.

14. The session processing system of claim 10, further comprising:
an offline function entity, adapted to receive and store the session invitation information sent by the recipient service server, and send the stored session invitation information to the recipient service server after receiving a logon notification sent by the recipient service server, wherein:
the recipient service server is further adapted to send the logon notification to the offline function entity after detecting logon of the recipient; and obtain the session invitation information stored by the offline function entity and send the information to the recipient.

15. The session processing system of claim 11 or claim 12, further comprising:
a uniform storage entity, adapted to create a session connection with the initiator after receiving an offline notification from the recipient service server, and store a session content sent by the initiator; and send the stored session content to the recipient service server after receiving the logon notification from the recipient service server, wherein:
the recipient service server is further adapted to send the offline notification to the uniform storage entity after detecting that the recipient is offline; and send the logon notification to the uniform storage entity after detecting that the recipient logs on, and send the session content sent by the uniform storage entity to the recipient; and
the recipient is further adapted to receive the session content from the recipient service server.

16. A session and message processing method, comprising:
receiving, by a recipient service server, a session request or a discrete message sent by an initiator; and
sending the session request or the discrete message to an InterWorking Function (IWF) entity according to user settings or operator policies when detecting that a recipient is offline; and
sending, by the IWF entity, the session request or the discrete message to the recipient or accepting the session request or the discrete message in place of the recipient by using an underway message service of the recipient.

17. The session and message processing method of claim 16, further comprising:
obtaining, by the recipient service server, information on the underway message service of the recipient from a Home Subscriber Server (HSS), and sending the information to the IWF entity; or, obtaining, by the IWF entity, the information on the underway message service of the recipient from the HSS; and
sending, by the IWF entity, the session request or the discrete message to the recipient or accepting the session request in place of the recipient by using the underway message service of the recipient by means of the obtained information on the underway message service.

18. The session and message processing method of claim 16, wherein a process of sending the session request or the discrete message to the recipient by using the underway message service of the recipient comprises:
converting the session request or the discrete message to a message of a type of the underway message service of the recipient, and sending the converted message to the recipient.

19. The session and message processing method of claim 16, after the IWF entity accepts the session request in place of the recipient, the method further comprises:
creating, by the IWF entity, a session channel with the initiator, receiving a session content from the initiator through the session channel, converting the session content to a message complied with a type of the underway message service of the recipient, and send the converted message to the recipient; or
receiving the message from the recipient, converting the message to a message complied with a Session Initiation Protocol (SIP) domain, and sending the converted message to the initiator through the created session channel.

20. A session and message processing method, comprising:
receiving, by a recipient service server, a session request or a discrete message sent by an initiator; and
forwarding the session request or the discrete message to an authorized user through a service server of an online authorized user according to authorized user information set by a recipient when detecting that the recipient is offline.

21. The method of claim 20, further comprising:
creating, by the authorized user, a session channel with the initiator after receiving the session request, and establishing a session with the initiator in place of the recipient.

22. The method of claim 21, further comprising:
sending, by the recipient service server, a notification about the authorized user performing a session with the initiator or receiving messages in place of the recipient to the recipient through an InterWorking Function (IWF) entity by using an underway message service of the recipient, or storing the notification through an offline function entity, whereupon the recipient obtains the notification after logging on; and/or
storing, by a recipient uniform storage entity, a session content between the initiator and the authorized user.

23. A session and message processing system, comprising:
a recipient service server, adapted to receive a session request or a discrete message sent by an initiator; and send the session request or the discrete message to an InterWorking Function (IWF) entity according to user settings or operator policies when detecting that a recipient is offline; and
an IWF entity, adapted to receive the session request or the discrete message sent by the recipient service server; and send the session request or the discrete message to the recipient or accept the session request or the discrete message in place of the recipient by using an underway message service of the recipient.

24. The session and message processing system of claim 23, further comprising a Home Subscriber Server (HSS) which is adapted to store information on the underway message service of the recipient, wherein:
the recipient service server is further adapted to obtain the information on the underway message service of the recipient from the HSS; and
the IWF entity is further adapted to obtain the information on the underway message service of the recipient from the HSS or recipient service server; and perform an operation of sending the session request to the recipient or accepting the session request in place of the recipient by using the information on the underway message service of the recipient.

25. A session and message processing system, comprising:
a recipient service server, adapted to receive a session request or a discrete message sent by an initiator; and send the session request or the discrete message to an authorized user service server according to authorized user information set by a recipient when detecting that the recipient is offline; and
an authorized user service server, adapted to forward the session request or the discrete message sent by the recipient service server to an authorized user.

26. The system of claim 25, further comprising an InterWorking Function (IWF) entity or offline function entity, wherein:
the recipient service server is further adapted to send a notification about the authorized user performing a session with the initiator in place of the recipient to the IWF entity or offline function entity;
the IWF entity is adapted to: receive the notification from the recipient service server, and send the notification to the recipient through an underway service message of the recipient or a Circuit Switched (CS) domain; and
the offline function entity is adapted to: receive the notification from the recipient service server, and send the notification to the recipient in the form of an offline message.

27. The system of claim 25, further comprising:
a recipient uniform storage entity, adapted to store a session content between the initiator and the authorized user; and
a Home Subscriber Server (HSS), adapted to store the authorized user information set by the recipient.
